# EUROPEAN PATENT APPLICATION

(11) **EP 4 672 535 A1**
(43) Date of publication of application: **31.12.2025**
(21) Application number: 24184163.4
(22) Date of filing: 25.06.2024
(51) Int. Cl.: H02J 1/14, C25B 1/02, H02J 3/12, H02J 3/14, H02J 3/18, H02P 13/06

(54) **POWER SYSTEM HAVING ELECTROLYZERS**

(71) Applicant: Siemens Energy Global GmbH & Co. KG, 81739 München (DE)
(72) Inventor: Lukianov, Semen, 91058 Erlangen (DE); Loku, Fisnik, 90439 Nürnberg (DE)

(57) **Abstract**

A power system (100) includes a power supply line (102) to transfer an alternating current electrical power from a grid (104), a transformer unit (114) to transform the alternating current electrical power from a voltage input to a voltage output and including a tap changer (116) and a plurality of tap positions (202), a rectifier unit (124) to convert the alternating current electrical power to a direct current electrical power and including a plurality of firing angles (204), an electrical load (106) to consume the direct current electrical power at a first power consumption level having a first tap position (202) and a first firing angle (204) and at a second power consumption level having a second tap position (202) and a second firing angle (204), and a control unit (136) operable to change the tap position (202) from the first tap position (202) to the second tap position (202) and change the firing angle (204) from the first firing angle (204) to the second firing angle (204).

## Description

### BACKGROUND

An electrolysis system typically includes a plurality of electrolyzers and is used to store surplus renewable energy in the form of hydrogen gas, which can be converted into power during periods of high demand or low renewable generation. The number of ectrolysis systems installed in the power grids continuously increases. Considering this, certain requirements, such as power quality requirements, for the connection of such large electrolysis systems in the networks are being defined. The power quality requirements include requirements for power factor, requirements for harmonics, etc.

The electrolysis systems normally have harmonic filters and power compensation system in order to meet the power quality requirements. The presence of any undesired orders of harmonics, such as the second order harmonics, can lead to overheating equipment, violation of the power quality requirements, and equipment malfunctions, etc. However, the installation of the harmonic filters increases the cost of the electrolysis systems.

### BRIEF SUMMARY

In one aspect, a power system that receives an alternating current electrical power from a grid is provided. The power system includes a power supply line connected to the grid and operable to transfer the alternating current electrical power from the grid. A transformer unit is coupled to the power supply line and operable to transform the alternating current electrical power from a voltage input to a voltage output. The transformer unit includes a tap changer and a plurality of tap positions. A rectifier unit is coupled to the transformer unit and operable to convert the alternating current electrical power to a direct current electrical power. The rectifier unit includes a plurality of firing angles. An electrical load is coupled to the rectifier unit and operable to consume the direct current electrical power at a first power consumption level having a first tap position and a first firing angle and at a second power consumption level having a second tap position and a second firing angle. A control unit is coupled to the transformer unit and the rectifier unit and operable to change the tap position from the first tap position to the second tap position and change the firing angle from the first firing angle to the second firing angle.

In another aspect, a method of operating a power system that receives an alternating current electrical power from a grid is provided. The method includes transferring the alternating current electrical power from the grid, transforming the alternating current electrical power from a voltage input to a voltage output by a transformer unit, the transformer unit including a tap changer and a plurality of tap positions. The method further includes converting the alternating current electrical power to a direct current electrical power by a rectifier unit, the rectifier unit including a plurality of firing angles. The method further includes operating an electrical load to consume the direct current electrical power at a first power consumption level having a first tap position and a first firing angle and at a second power consumption level having a second tap position and a second firing angle, and controlling the transformer unit and the rectifier unit to change the tap position from the first tap position to the second tap position and change the firing angle from the first firing angle to the second firing angle.

### BRIEF DESCRIPTION OF THE DRAWINGS

To easily identify the discussion of any particular element or act, the most significant digit or digits in a reference number refer to the figure number in which that element is first introduced.
FIG. 1 illustrates a schematic diagram of a power system having electrical loads.
FIG. 2 illustrates a schematic simplified diagram of the power system of FIG. 1.
FIG. 3 illustrates a schematic voltage output chart of a transformer unit vs. tap position of the transformer unit for use in the power system of FIG. 1.
FIG. 4 illustrates a schematic current output chart of a rectifier unit vs. firing angle of the rectifier unit for use in the power system of FIG. 1.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

It should be understood that the words or phrases used herein should be construed broadly, unless expressly limited in some examples. For example, the terms "including", "having", and "comprising", as well as derivatives thereof, mean inclusion without limitation. The singular forms "a", "an", and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith" as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

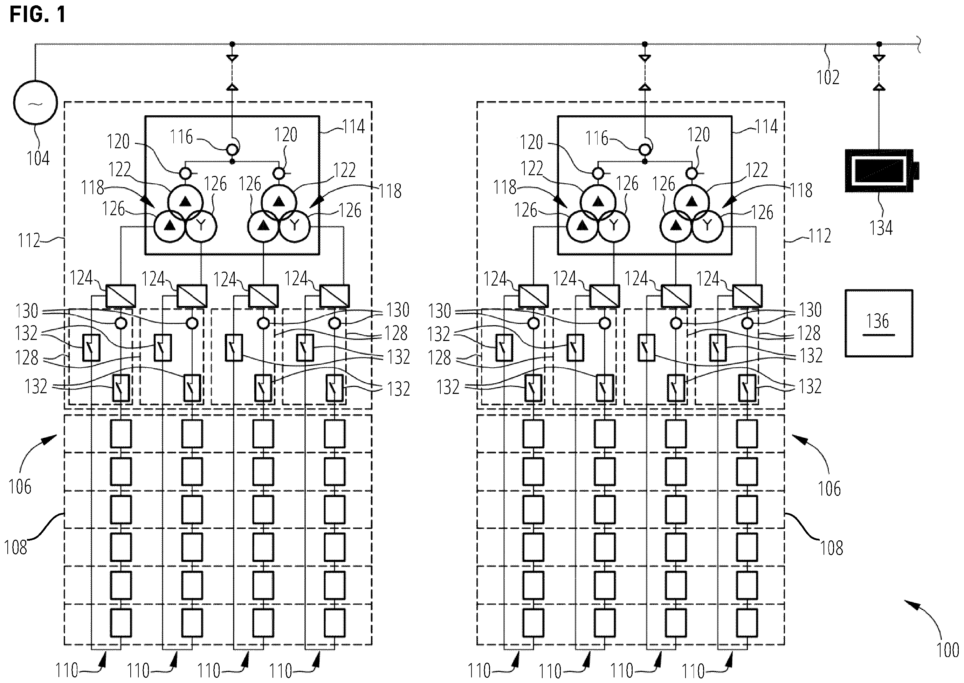

FIG. 1 illustrates a schematic diagram of a power system 100. The power system 100 includes a power supply line 102 that is connected to a grid 104. The grid 104 may be a public grid or a private grid that provides alternating current (AC) electrical power.

The power system 100 includes a plurality of electrical loads 106 that are connected to the power supply line 102. In the embodiment shown in FIG. 1, the plurality of electrical loads 106 are two electrolyzers 108 that produce hydrogen and oxygen through a process of water electrolysis. In other embodiments, the electrical loads 106 may include one electrolyzer 108 or more than two electrolyzers 108, or other loads or devices.

Each electrolyzer 108 includes a plurality of electrolysis modules 110 that are connected to the power supply line 102 via a power supply unit 112. The power supply unit 112 includes a transformer unit 114 that transfers the AC electrical power from a voltage input provided by the power supply line 102 to a desired voltage output. The transformer unit 114 includes a tap changer 116. One side of the tap changer 116 is connected to the power supply line 102. The other side of the tap changer 116 is connected to a plurality of transformers 118 via a respective first current transformer 120. In the embodiment shown in FIG. 1, two transformers 118 are connected to the tap changer 116. In other embodiments, only one transformer 118 or more than two transformers 118 may be connected to the tap changer 116. Each transformer 118 has a primary winding 122 that is connected to the tap changer 124. The tap changer 124 contacts taps of the primary windings 122 and adjusts the voltage output of the transformers 118 to the desired voltage output by changing tap position of the transformers 118. Each transformer 118 has two secondary windings 126. One secondary winding 126 is in delta connection and the other secondary winding 126 is in star circuit.

The power supply unit 112 includes a plurality of rectifier units 124 that convert the AC electrical power received from the power supply units 112 to direct current (DC) electrical power. The rectifier units 124 are thyristor-based rectifier units 124. Each rectifier unit 124 is connected to a respective secondary winding 126 at the AC voltage sides and is connected to a respective switching unit 128 at the DC voltage side. The switching unit 128 has a second current transformer 130 for detecting a direct current of the respective rectifier unit 124. The switching unit 128 also has a switching element 132 that is connected to a respective electrolysis module 110 for electrically activating the respective electrolysis module 110.

The power system 100 includes an energy storage unit 134 that is connected to the power supply line 102 for storing electrical energy from the grid 104 to the energy storage unit 134 and for releasing the stored electrical energy from the energy storage unit 134 to the grid 104. The energy storage unit 134 may include, for example, capacitors, accumulators, inductors, etc.

The power system 100 includes a control unit 136 that controls and monitors the operation state of the power system 100. The control unit 136 is operatively connected with a control center of the grid 104 to receive operation data of the grid 104, such as electrical power that is available to the power system 100. The control unit 136 is operatively connected with the energy storage unit 134 for controlling the electrical energy to and from the energy storage unit 134. The control unit 136 is operatively connected with the power supply units 112 for controlling the power supply units 112 to provide desired AC electrical power to the electrolyzers 108 depending on the available electrical power of the grid 104. The control unit 136 is operatively connected with the rectifier units 124 for controlling the rectifier unit 124 to provide desired DC electrical power to the electrolyzers 108 depending on the available electrical power of the grid 104. The control unit 136 is operatively connected with the switching units 128 to control the switching state. The control unit 136 is typically a micro-processor based device and includes memory devices, data storage devices, and output devices for collecting, analyzing, storing data, and outputting data.

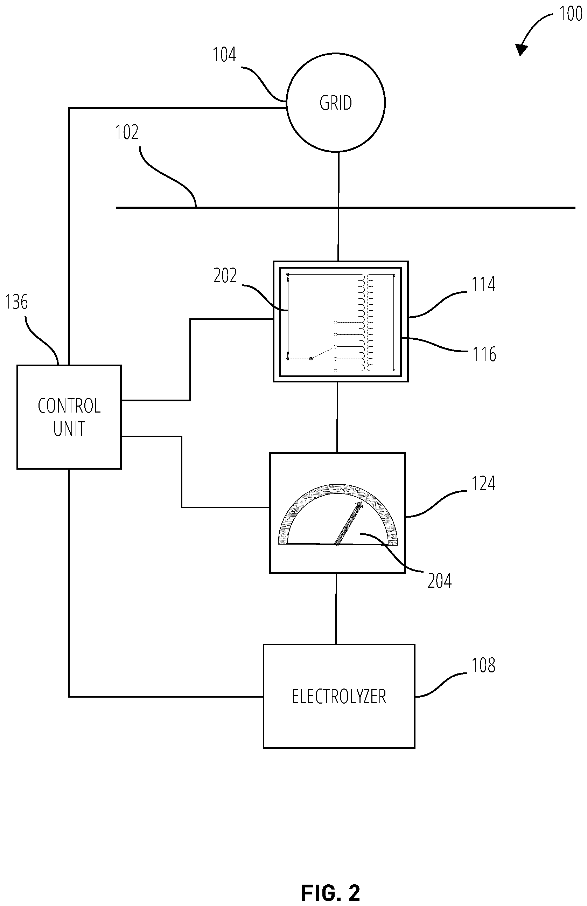

FIG. 2 illustrates a schematic simplified diagram of the power system 100. The grid 104 provides AC electrical power to the transformer unit 114 through the power supply line 102. The transformer unit 114 provides the AC electrical power to the rectifier unit 124 at a desired AC voltage output. The rectifier unit 124 converts the AC electrical power to DC electrical power and provides the DC electrical power to an electrolyzer 108.

The transformer unit 114 includes a plurality of tap positions 202 to regulate the AC voltage output. The tap changer 116 changes the tap positions 202 of the transformer unit 114 to increase or decrease the AC voltage output in a step by step manner.

The rectifier unit 124 can be set to a plurality of firing angles 204 to regulate the DC current output. A range of the firing angle 204 is between 0 degree to 180 degrees. A firing angle 204 of 0 degree results in maximum average current output which is similar to an uncontrolled rectifier unit, such as a rectifier unit using diodes. As the firing angle 204 increases from 0 degree to 180 degrees, the current output decreases.

The control unit 136 is operatively connected with the grid 104, the transformer unit 114, the rectifier unit 124, and the electrolyzer 108. The control unit 136 controls the rectifier unit 124 to adjust the firing angle 204 and the transformer unit 114 to adjust the tap position 202 to regulate the DC electrical power provided to the electrolyzer 108 based on the need of the electrolyzer 108 and the availability of the grid 104 that can be provide to the electrolyzer 108.

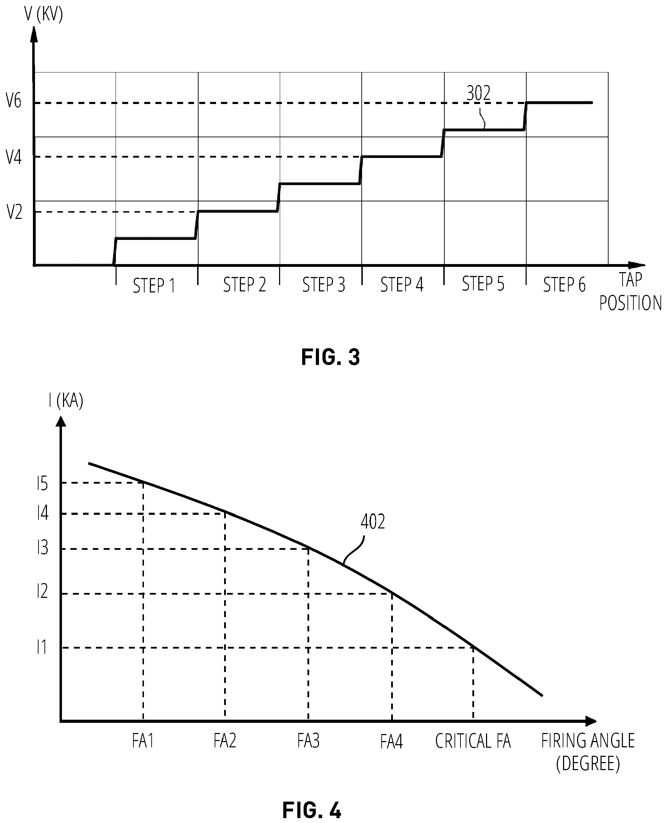

FIG. 3 illustrates a schematic voltage output chart 302 of the transformer unit 114 vs. the tap position 202. The tap position 202 includes a plurality of steps. In the embodiment illustrated in FIG. 3, the tap position 202 includes 6 steps. In other embodiments, the tap position 202 may have more or less than 6 steps as desired, such as 4 steps, 8 steps, 10 steps, etc.

The transformer unit 114 outputs a corresponding voltage output V when the transformer unit 114 is set at a respective step. For example, the transformer unit 114 outputs voltage output V2 when the tap position 202 is set at STEP 2, outputs voltage output V4 when the tap position 202 is set at STEP 4, outputs voltage output V6 when the tap position 202 is set at STEP 6, etc. The higher the tap position 202, the higher the voltage output. The tap changer 116 is an on-load tap changer which adjusts the voltage output during the operation of the power system 100.

FIG. 4 illustrates a schematic current output chart 402 of the rectifier unit 124 vs. firing angle 204 of the rectifier unit 124. The rectifier unit 124 outputs a corresponding current output I when the rectifier unit 124 is set at a respective firing angle 204. For example, the rectifier unit 124 outputs current output 15 when the firing angle 204 is set at FA1, outputs current output I4 when the firing angle 204 is set at FA2, outputs current output I3 when the firing angle 204 is set at FA3, etc. The higher the firing angle 204, the less the current output.

The second order harmonics may be introduced by the rectifier unit 124 and fed to the power system 100 when the firing angle 204 is equal to or greater than a critical firing angle 204, for example, equal to or greater than CRITICAL FA as shown in FIG. 4. The presence of the second order harmonics in the power system 100 can lead to undesirable effects, such as increased heating in equipment, violation of the power quality requirements, equipment malfunction, etc. The second order harmonics is an important factor to monitor and mitigate in the power system 100 to maintain the power quality requirements.

The electrolyzers 108 usually consume comparatively large power. In order to reduce the grid interference to the grid 104 due to power consumption level changes of the electrolyzers 108, it is preferred that the power consumption level of the electrolyzers 108 is controlled in a continuous power setting. The power consumption level of the electrolyzers 108 can be controlled either by the tap changers 116 to set the AC electrical power at a desired voltage output or by the rectifier units 124 to control the DC electrical power at a desired current output, or by both.

In operation, the electrolyzers 108 are operated at a first power consumption level. The tap position 202 is set at a first tap position 202, for example step 3 as shown in FIG. 3, and the firing angle 204 is set at a first firing angle 204, for example FA3 as shown in FIG. 4, to provide the DC electrical power to the electrolyzers 108. The control unit 136 monitors the power consumption level of the electrolyzers 108 during the operation. During operation, if the power consumption level of the electrolyzers 108 is required to drop from the first level to a second level, and the dropped second power consumption level and the second tap position 202 are known prior to the drop, for example, the second tap position 202 is step 2, the control unit 136 controls the tap changer 116 to change the tap position 202 from the first tap position 202 to the second tap position 202, for example, from step 3 to step 2, prior to fulfill other changes. The other changes include changing the firing angle 204 from the first firing angle 204 to the second firing angle 204 to provide the needed current output, for example, changing the firing angle 204 from FA3 to FA4.

During operation, if the power consumption level of the electrolyzers 108 is required to drop from the first level to a second level, and the dropped second power consumption level and the second tap position 202 are not known prior to the drop, the control unit 136 determines a second firing angle 204 that is greater than the first firing angle 204 and is less than the critical firing angle 204, for example, determining FA4 as the second firing angle 204, and controls the rectifier unit 124 to increase the firing angle 204 from the first firing angle 204 to provide less current output to the electrolyzers 108 until the firing angle 204 reaches the second firing angle 204. The control unit 136 triggers the tap changer 116 to change the tap position 202 when the firing angle 204 reaches the second firing angle 204. The tap changer 116 performs a step down operation to set the tap position 202 to a lower step to provide less voltage output to the electrolyzers 108 once it is triggered. If the firing angle 204 needs to be increased faster than the time required for the tap changer 116 to step down the tap position 202 which may lead the firing angle 204 exceeding the critical firing angle 204 and introducing undesired second order harmonics, the control unit 136 controls the rectifier unit 124 to freeze the firing angle 204 at the second firing angle 204 for a time period to allow the tap changer 116 to complete the step down process. The time period may be less than 30 seconds, less than 20 seconds, less than 10 seconds, less than 1 second, or any necessary time period that is needed by the tap changer 116 to set the tap position 202 to the required step. As such, the occurrence of the second order harmonics is avoided in the power system 100 to meet the power quality requirement. The second firing angle 204 may be 20 degrees greater than the first firing angle 204, 10 degrees greater than the first firing angle 204, 5 degrees greater than the first firing angle 204, 3 degrees greater than the first firing angle 204, or any necessary degrees as design required.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

### LISTING OF DRAWING ELEMENTS

100 power system
102 power supply line
104 grid
106 electrical load
108 electrolyzer
110 electrolysis module
112 power supply unit
114 transformer unit
116 tap changer
118 transformer
120 first current transformer
122 primary winding
124 rectifier unit
126 secondary winding
128 switching unit
130 second current transformer
132 switching element
134 energy storage unit
136 control unit
202 tap position
204 firing angle
302 voltage output chart
402 current output chart

## Claims

1. A power system (100) that receives an alternating current electrical power from a grid (104), the power system (100) comprising:
a power supply line (102) connected to the grid (104) and operable to transfer the alternating current electrical power from the grid (104);
a transformer unit (114) coupled to the power supply line (102) and operable to transform the alternating current electrical power from a voltage input to a voltage output, the transformer unit (114) comprising a tap changer (116) and a plurality of tap positions (202);
a rectifier unit (124) coupled to the transformer unit (114) and operable to convert the alternating current electrical power to a direct current electrical power, the rectifier unit (124) comprising a plurality of firing angles (204);
an electrical load (106) coupled to the rectifier unit (124) and operable to consume the direct current electrical power at a first power consumption level having a first tap position (202) and a first firing angle (204) and at a second power consumption level having a second tap position (202) and a second firing angle (204); and
a control unit (136) coupled to the transformer unit (114) and the rectifier unit (124) and operable to change the tap position (202) from the first tap position (202) to the second tap position (202) and change the firing angle (204) from the first firing angle (204) to the second firing angle (204).

2. The power system (100) of claim 1, wherein the tap position (202) is set to the second tap position (202) prior to change the firing angle (204) from the first firing angle (204) to the second firing angle (204).

3. The power system (100) of claim 1, wherein the second firing angle (204) is greater than the first firing angle (204) and is less than a critical firing angle (204) that introduces a second order harmonics.

4. The power system (100) of claim 3, wherein the tap position (202) is set to the second tap position (202) when the firing angle (204) is at the second firing angle (204).

5. The power system (100) of claim 3, wherein the firing angle (204) is frozen at the second firing angle (204) for a time period.

6. The power system (100) of claim 3, wherein the second firing angle (204) is 5 degrees greater than the first firing angle (204).

7. The power system (100) of claim 3, wherein the firing angle (204) is frozen at the second firing angle (204) for less than 10 seconds.

8. The power system (100) of claim 1, wherein the electrical load (106) comprises an electrolyzer (108).

9. A method of operating a power system (100) that receives an alternating current electrical power from a grid (104), the method comprising:
transferring the alternating current electrical power from the grid (104);
transforming the alternating current electrical power from a voltage input to a voltage output by a transformer unit (114), the transformer unit (114) comprising a tap changer (116) and a plurality of tap positions (202);
converting the alternating current electrical power to a direct current electrical power by a rectifier unit (124), the rectifier unit (124) comprising a plurality of firing angles (204);
operating an electrical load (106) to consume the direct current electrical power at a first power consumption level having a first tap position (202) and a first firing angle (204) and at a second power consumption level having a second tap position (202) and a second firing angle (204); and
controlling the transformer unit (114) and the rectifier unit (124) to change the tap position (202) from the first tap position (202) to the second tap position (202) and change the firing angle (204) from the first firing angle (204) to the second firing angle (204).

10. The method of claim 9, further comprising trigging the tap changer (116) to change the tap position (202) from the first tap position (202) to the second tap position (202) prior to trigging the rectifier unit (124) to change the firing angle (204) from the first firing angle (204) to the second firing angle (204).

11. The method of claim 9, further comprising determining the second firing angle (204) greater than the first firing angle (204) and less than a critical firing angle (204) that introduces a second order harmonics.

12. The method of claim 11, further comprising trigging the tap changer (116) to change the tap position (202) from the first tap position (202) to the second tap position (202) when the firing angle (204) is at the second firing angle (204).

13. The method of claim 11, further comprising freezing the firing angle (204) at the second firing angle (204) for a time period.

14. The method of claim 11, further comprising determining the second firing angle (204) 5 degrees greater than the first firing angle (204).

15. The method of claim 11, further comprising freezing the firing angle (204) at the second firing angle (204) for less than 10 seconds.
